# EUROPEAN PATENT SPECIFICATION

(11) **EP 1 596 507 B1**
(45) Date of publication and mention of the grant of the patent: **12.08.2009**
(21) Application number: 05014199.3
(22) Date of filing: 07.12.1998
(51) Int. Cl.: H04B 7/005

(54) **Power control system in a mobile telecommunication network**
Vorrichtung zur Leistungsregelung in einem mobilen Telekommunikationsnetz
Système de réglage de la puissance dans un réseau mobile de télécommunication

(43) Date of publication of application: 16.11.2005
(62) Divisional of application: 98966894.2
(73) Proprietor: Qualcomm Incorporated, San Diego, CA 92121-1714 (US)
(72) Inventor: Longoni, Fabio, 02130 Espoo (FI); Salonaho, Oscar, 00100 Helsinki (FI)
(74) Representative: TBK-Patent

(56) References cited:
- EP-A- 0 822 672
- WO-A-97/34434
- WO-A-97/34439
- US-A- 4 305 150

## Description

The present invention relates to a method and system for performing power control in a mobile communication network such as a radio access network of a WCDMA (Wideband Code Division Multiple Access) system like the UMTS (Universal Mobile Telecommunications System).

In a mobile radio network, the transmitting power of a mobile station is adjusted by a closed loop power control in order to keep the received uplink Signal-to-Interference Ratio (SIR) at a given SIR target. Therefore, a base station controlling the mobile station performs an estimation of the total uplink received interference in the current frequency band. Based on the estimation, the base station generates power control commands which are transmitted to the mobile station.

Upon reception of a power control command, the mobile station adjusts the transmit power in a given direction with a predetermined step. The step size is a parameter which may differ between different radio cells.

Additionally, an outer loop power control is performed in order to adjust the SIR target used by the closed loop power control. The SIR target is independently adjusted for each connection based on an estimated quality of the connection. In addition, the power offset between uplink channels may be adjusted. The quality estimate is derived based on different service combinations. Typically, a combination of an estimated bit-error rate and frame-error rate is used.

In a radio access network of a WCDMA system, packet- and circuit-switched services can be freely mixed, with variable bandwidths, and delivered simultaneously to the same user, with specific quality levels. Moreover, bandwidths requirements for a user can be changed during a session. Therefore, a flexible power control is required in such a radio access network of the WCDMA system.

WO 97/34439 discloses a method and apparatus for providing centralized power control in a communication system. Each base station in the system operates to control both the forward link and the reverse link power. A radio link manager provides a common threshold for determining the proper power level of the reverse link signal at each base station. The radio link manager also provides a ratio of the forward link signal strength to a pilot signal strength to control forward link power control. The radio link manager provides the threshold and ratio uniformly to all base stations to provide a uniform operating point for all base stations in the system, thus, increasing capacity. The same centralized power control can be expanded to provide a mechanism for intersystem soft handoff.

WO 97/34434 is directed to a power control in a spread-spectrum communication system in which the step-down size of a power control threshold is dynamically adjusted based on an acquired number of frames of poor quality. The step-down size of the threshold is increased or decreased depending on an amount of frame erasures detected by the system. Additionally, a full-rate or sub-rate frame quality is used to dynamically adjust the step-down size of a power control threshold.

It is an object of the present invention to provide a network element for performing a flexible power control.

This object is achieved by a network element as defined in claim 1 or any one of the dependent claims.

An outer loop power control is performed in a network element using a reliability information set by a base station such that a bearer specific controlling procedure can be performed, wherein the signaling of the procedure can be done via the user plane. Thereby, an outer loop power control with the necessary flexibility can be implemented so as to adapt the power control parameters to the bearer characteristics such as bit rate, required quality, bit error rate, coding and interleaving, and the like.

The power control may be performed on the basis of a reliability information transmitted from a plurality of base stations connected to the network element, wherein the variation of the target setpoint for power control is performed on the basis of a consideration of each respective reliability information transmitted from the plurality of base stations to the network element, and wherein the power control command is transmitted to each of the plurality of base stations. Thereby, the improved power control also can be performed in soft handover cases, where two or more base stations simultaneously communicate with one mobile terminal.

The determination of the variation of the target setpoint for power control can be performed on the basis of a selection of the best reliability information or, alternatively, on the basis of a predetermined combination of the received reliability informations

The target setpoint is a target energy per bit to noise power density ratio.

Preferably, the network element is a radio network controller in which the required parameters of the bearer characteristics are available.

The reliability information may be inserted as a control information into an uplink data packet such as a packet data unit (PDU) of the User Plane Transport Protocol (UPTP). The format and/or coding of the control information may be bearer dependent. Thereby, the overhead of the PDUs can be adapted to the bearer and thus minimized. Preferably, the format and/or coding of the control information is defined in a channel setup phase.

The reliability information may comprise a result of a redundancy code check performed by the base station, and/or a channel specific parameter. In case different uplink branches are combined, one resulting reliability information is defined. Thereby, an improved power control also can be performed in softer handover cases, where a plurality of radio cells belonging to the same base station are involved in the communication with the mobile terminal.

The power control command generated in the network element may be inserted as a control information into a downlink data packet which may also be a PDU of the UPTP. In case a power control command is required while no downlink data packet is being transmitted, an empty downlink data packet containing only the power control command is transmitted.

The coding of the power control command is bearer dependent to thereby minimized the overhead of the downlink data packets. In particular, the coding of the power control command is defined in a channel setup phase.

The power control command defines a variation of the energy per bit to noise power density ratio Eb/No. In particular, the power control command may have a length of one bit so as to define an incrementation or decrementation of the Eb/No. Alternatively, the power control command may have a length of a plurality of bits so as to define a change value of the Eb/No.

In case a downlink data splitting is performed in a network element, the power control command may be duplicated in all branches.

If a dedicated channel activity is performed, an absolute value of the target setpoint may be set by the base station in all branches. In this case, a step size for the variation of the target setpoint may be redefined during the dedicated channel activity using a layer 3 signaling.

The base station may comprise a checking means for checking a redundancy code received from the mobile station, wherein a generating means of the base station generates the reliability information on the basis of the checking result of the checking means and/or a channel decoder specific parameter.

Furthermore, the base station may comprise a target setting means for changing the target setpoint for power control in accordance with the variation defined by the received power control command. The target setting means may be controllable so as to set an absolute value of the target setpoint. Moreover, the target setting means may be controllable so as to redefine a step size for the variation of the target setpoint, based on a layer 3 signaling.

The determination means of the network element may be arranged to determine the variation of the target setpoint for power control on the basis of each reliability information received from a plurality of base stations, wherein the power control command is transmitted by the transmitting means of said network element to each of the plurality of base stations. In this case, the determination means can be arranged to determine the variation of the target setpoint for power control on the basis of a selection of the worst reliability information received from the plurality of base stations, or on the basis of a predetermined combination of the received reliability information.

Moreover, the generating means of the at least one base station may be arranged to determine a resultant reliability information on the basis of a plurality of reliability informations generated for a plurality of uplink branches. In this case, the generating means of the at least one base station may be arranged to determine the resultant reliability information on the basis of the worst reliability information of the plurality of uplink branches, or on the basis of a predetermined combination of the generated reliability informations.

### BRIEF DESCRIPTION OF THE DRAWINGS

In the following, the present invention will be described in greater detail on the basis of a preferred embodiment with reference to the accompanying drawings in which:
Fig. 1 shows a diagram indicating information processings and flows in a base station or a serving radio network controller, or between the base station and the serving radio network controller, respectively, of a power control according to an embodiment of the present invention; and
Fig. 2 shows a principle block diagram of an embodiment of the present invention.

### DESCRIPTION OF AN EMBODIMENT

In the following, an embodiment of present invention will be described on the basis of a radio access network of a WCDMA system such as the UMTS.

In such a radio access network, a mobile station (MS) is radio-connected to at least one base station (BS) which is connected to a radio network controller (RNC). In WCDMA based systems, the MS can be connected to several BS simultaneously due to macrodiversity.

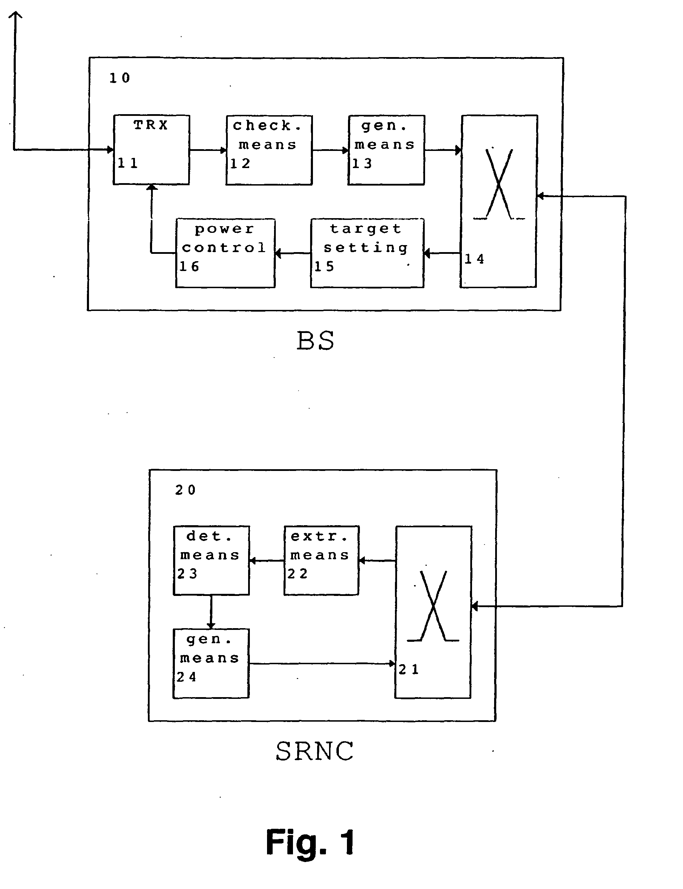

Fig. 1 shows a BS 10 connected to a serving RNC (SRNC) 20 which serves the radio cell in which a MS controlled by the BS 10 is currently located. The BS 10 comprises a transceiver 11 for performing a radio communication with the controlled MS. Furthermore, the BS 10 comprises a switching means such as an ATM switch 14 arranged to connect a receiving path and a transmitting path of the BS 10 with a switching means such as an ATM switch 21 of the SRNC 20.

Moreover, the BS 10 comprises a power control means 16 which performs the closed loop power control in order to adjust the transmission power of the MS on the basis of a setting command supplied from a target setting means 15.

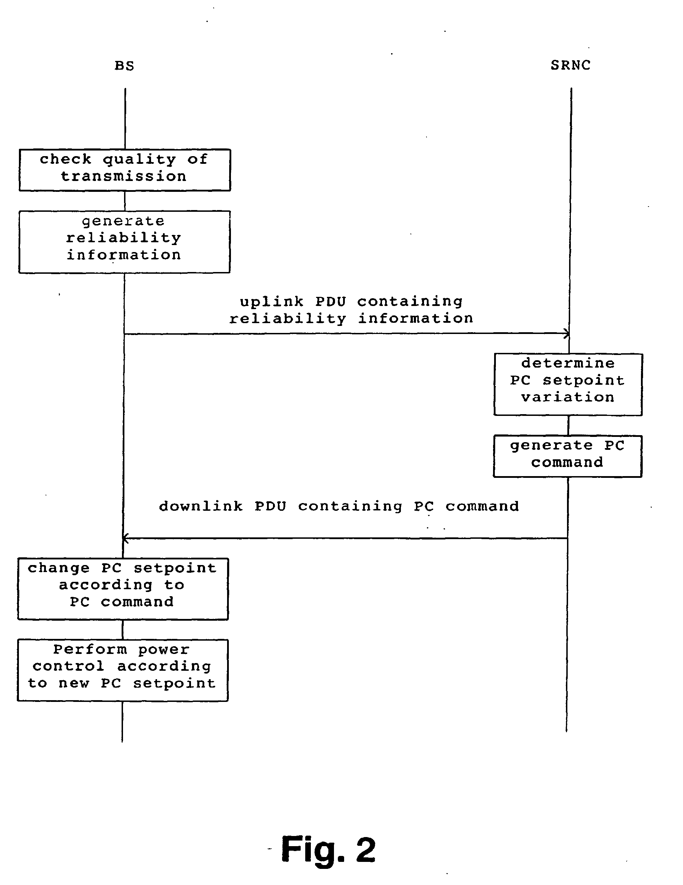

The detailed function of the power control system according to the preferred embodiment is described in the following on the basis of the diagram shown in Fig. 2. According to Fig. 2, information processing and transmission in and between the BS 10 and the SRNC 20 is shown, wherein the processing flow starts at the top of Fig. 2 and proceeds to the bottom thereof.

Initially, the transmission quality of the radio transmission between the controlled MS and the BS 10 is checked on the basis of an energy per bit to noise power density ratio Eb/No which is a statement of the general transmission condition independent of the actual received power, the bit rate frequency, and the noise figure of the receiver. The relation between the sampled signal to noise power ratio [S/N]_{S} and Eb/No depends on the pulse wave form and the receiving filter characteristics. It should be noted that any other parameter for determining the quality of transmission can be used in the present power control system.

The above described checking procedure is performed in a checking means 12 of the BS 10. Based on the checked quality of transmission, a generating means 13 of the BS 10 generates a reliability information indicating the transmission quality. The reliability information is supplied to the ATM switch 14 which inserts the reliability information as a control information into an uplink packet data unit (PDU) of the User Plane Transport Protocol (UPTP), and transmits the uplink PDU to the SRNC 20.

The ATM switch 21 of the SRNC 20 receives the uplink PDU and supplies it to an extracting means 22 which is arranged to extract the reliability information from the received uplink PDU.

The extracted reliability information is supplied to a determination means 23 which determines a power control setpoint variation based on the supplied reliability information and under consideration of the corresponding bearer charateristics. Thereby, the Eb/No setpoint is adapted to the bearer characteristics of the current connection.

Based on the determined setpoint variation, a generating means 24 generates a power control command (PC command) defining the setpoint variation. Subsequently the PC command is supplied to the ATM switch 21 which inserts the PC command as a control information into a downlink PDU of the UPTP, and transmits the downlink PDU to the ATM switch 14 of the BS 10.

In the BS 10, the ATM switch 14 extracts the PC command from the downlink PDU and supplies it to the target setting means 15. Based on the received PC command the target setting means 15 generates a power setting command and supplies it to the power control means 16, such that the power control setpoint is changed according to the received PC command. Subsequently, the power control means 16 performs a closed loop power control on the basis of the new power control setpoint, i.e. Eb/No setpoint.

According to the above description of the preferred embodiment, the outer loop power control algorithm is located in the SRNC 20, and, based on the reliability information set by the BS 10 and included in the uplink user data, a variation of the target Eb/No setpoint is commanded, which is to be used by the fast uplink power control loop in the air interphase. The variation, i.e. the PC command, is signaled to the BS 10.

The format and/or coding of the reliability information in the uplink PDU is generated based on the corresponding bearer and is defined in the channel setup phase. It can be composed e.g. of the results of a Cyclic Redundancy Code (CRC) check performed by the checking means 12 of the BS 10 on groups of bit, and/or by some channel specific parameters such as a channel decoder specific parameter or the like.

If two or more BSs 10 communicate with one MS, e.g. in soft handover cases, the SRNC 20 receives two or more reliability informations in the respective uplink PDUs. In this case, a resultant reliability information is determined by the determination means 23 of the SRNC 20 on the basis of a predetermined combination such as an average of the received reliability informations or a selection of one of the received reliability informations, e.g. the best reliability information. Then, the power control command is duplicated or multiplied and inserted into the respective downlink PDUs transmitted to the two or more BSs 10 which communicate with the MS.

Also in case different uplink branches are combined in one BS 10, e.g. in softer handover cases, only one resultant reliability information is defined in the generating means 13 of the BS 10, which may be obtained e.g. on the basis of the best reliability information of the uplink branches or on the basis of a predetermined combination of the received reliability informations, or which can be generated based on the combined signal from the sectors.

If the determination means 23 of the SRNC 20 determines the requirement of a variation of the power control setpoint and no downlink PDU is being transmitted at present, the ATM switch 21 generates an empty PDU which includes only the PC command supplied from the generating means 24 and no user data. This may occur for example either when there is no data activity in the downlink direction, or when the transmission rate of the downlink PDU is slower than the PC command rate.

The coding of the PC command generated in the generating means 24 is bearer specific and is defined in the channel setup phase from dedicated channel parameters stored in the SRNC 20. The PC command can be a simple bit which defines a predetermined upward or downward step, i.e. an incrementation or decrementation of the Eb/No setpoint. Alternatively, the PC command can be a number of bits defining with more accuracy the entity of the variation, i.e. the magnitude of the variation of the Eb/No setpoint, including no variation at all.

In case a downlink data splitting is performed in a Mediation Device Communicator (MDC) unit of the communication network, the same power control command is duplicated in all branches.

During a dedicated channel activity, the target setting means 15 of the BS 10 can be controlled by a layer 3 (L3) signaling to set an absolute value of the Eb/No setpoint in all branches, to thereby avoid drifts in the Eb/No setpoint values of different branches, which may be caused by handovers. Furthermore, the target setting means 15 can be controlled using a L3 signaling so as to redefine a step size for the Eb/No setpoint variation.

Thus, an outer loop power control is provided having the necessary flexibility to adapt its parameters, i.e. reliability information, PC command, step size, rate of PC command, to the bearer characteristics, i.e. bit rate required quality, bit error rate, coding and interleaving and so on.

It is to be pointed out that the power control method and system described in the preferred embodiment can be applied to any mobile radio network comprising a base station connected to a network element. The above description of the preferred embodiment and the accompanying drawings are only intended to illustrate the present invention. The preferred embodiment of the invention may thus vary within the scope of the attached claims.

In summary, a method and system for performing power control in a mobile communication network is described, comprising base stations and a network element connected to the base stations, wherein a reliability information is transmitted from at least one base station to the network element, the reliability information defining a quality of a respective radio transmission between the at least one base station and a mobile terminal or vice versa. Based on the transmitted reliability information, the network element determines a variation of a target setpoint for power control and transmits a power control command defining the variation of the target setpoint to the at least one base station. Thereby, a bearer specific controlling procedure can be performed and the signaling of the procedure can be done via the user plane. This implementation provides an outer loop power control having the necessary flexibility to adapt its parameters to the bearer characteristics of an actual connection.

## Claims

1. A network element for use in a system for performing power control in a mobile communication network comprising at least one base station **(10),** the network element **(20)** being connectable to said at least one base station **(10),** the network element comprising
a receiving means **(21)** for receiving reliability information, said reliability information defining a quality of a radio transmission between said base station **(10)** and a mobile terminal,
a determination means **(23)** for determining a variation of a target setpoint for power control, based on the received reliability information,
a generating means **(24)** for generating a power control command defining said variation of said target setpoint, and
a transmitting means **(21)** for transmitting said power control command to said at least one base station **(10),**
wherein said target setpoint is a target energy per bit to noise power density ratio Eb/No, and wherein a format and/or coding of said power control command is defined in a channel setup phase and is defined bearer dependent, wherein
said transmitting means **(21)** is arranged to insert said power control command as a control information into an empty downlink packet containing only said power control command and no user data, when said power control command is required while no downlink data packet is being transmitted.

2. A network element according to any of claim 1, wherein said determination means **(23)** is arranged to determine said variation of said target setpoint for power control on the basis of each reliability information received from a plurality of base stations **(10),** and wherein said power control command is transmitted by said transmitting means **(21)** to each of said plurality of base stations **(10).**

3. A network element according to claim 2, wherein said determination means **(23)** is arranged to determine said variation of said target setpoint for power control on the basis of a selection of the best reliability information received from said plurality of base stations **(10).**

4. A network element according to claim 2, wherein said determination means **(23)** is arranged to determine said variation of said target setpoint for power control on the basis of a predetermined combination of the received reliability information.

5. A network element according to any one of the preceding claims, wherein said network element is a radio network controller **(20).**

## Patentansprüche

1. Netzelement zur Verwendung in einem System zum Durchführen einer Leistungsregelung in einem Mobilkommunikationsnetz mit zumindest einer Basisstation (10), wobei das Netzelement (20) mit der zumindest einen Basisstation (10) verbindbar ist, mit:
einer Empfangseinrichtung (21) zum Empfangen von Zuverlässigkeitsinformationen, wobei die Zuverlässigkeitsinformationen eine Güte einer Funkübertragung zwischen der zumindest einen Basisstation (10) und einem Mobilendgerät definieren,
einer Bestimmungseinrichtung (23) zum Bestimmen einer Veränderung eines Zielsollwertes für eine Leistungsregelung auf der Grundlage der empfangenen Zuverlässigkeitsinformationen,
einer Erzeugungseinrichtung (24) zum Erzeugen eines die Veränderung des Zielsollwerts definierenden Leistungsregelungsbefehls, und
einer Übertragungseinrichtung (21) zum Übertragen des Leistungsregelungsbefehls zu der zumindest einen Basisstation (10),
wobei der Zielsollwert ein Verhältnis einer Zielenergie pro Bit zu einer Rauschleistungsdichte Eb/No ist,
ein Format und/oder eine Codierung des Leistungsregelungsbefehls in einer Kanalaufbauphase definiert werden/wird und trägerabhängig definiert werden/wird,
und die Übertragungseinrichtung (21) eingerichtet ist, um den Leistungsregelungsbefehl als Steuerinformationen in ein leeres Downlink- Paket einzufügen, das lediglich den Leistungsregelungsbefehl und keine Benutzerdaten beinhaltet, wenn der Leistungsregelungsbefehl erforderlich ist, während kein Downlink- Datenpaket übertragen wird.

2. Netzelement nach Patentanspruch 1, wobei die Bestimmungseinrichtung (23) eingerichtet ist, um die Veränderung des Zielsollwertes für eine Leistungsregelung auf der Grundlage von jeder von einer Vielzahl von Basisstationen (10) empfangenen Zuverlässigkeitsinformation zu bestimmen, und der Leistungsregelungsbefehl durch die Übertragungseinrichtung (21) zu jeder der Vielzahl der Basisstationen (10) übertragen wird.

3. Netzelement nach Patentanspruch 2, wobei die Bestimmungseinrichtung (23) eingerichtet ist, um die Veränderung des Zielsollwertes für die Leistungsregelung auf der Grundlage einer Auswahl der besten, von der Vielzahl von Basisstationen (10) empfangenen Zuverlässigkeitsinformation zu bestimmen.

4. Netzelement nach Patentanspruch 2, wobei die Bestimmungseinrichtung (23) eingerichtet ist, um die Veränderung des Zielsollwertes für die Leistungsregelung auf der Grundlage einer vorbestimmten Kombination der empfangenen Zuverlässigkeitsinformation zu bestimmen.

5. Netzelement nach zumindest einem der vorangehenden Patentansprüche, wobei das Netzelement eine Funknetzsteuereinrichtung (20) ist.

## Revendications

1. Elément de réseau destiné à une utilisation dans un système pour exécuter un réglage de puissance dans un réseau de communication mobile comprenant au moins une station de base (10), l'élément de réseau (20) pouvant être connecté à ladite au moins une station de base (10), l'élément de réseau comprenant
Un moyen de réception (21) pour recevoir une information de fiabilité, ladite information de fiabilité définissant une qualité d'une transmission radio entre ladite station de base (10) et un terminal mobile,
un moyen de détermination (23) pour déterminer une variation d'un point de consigne cible pour le réglage de puissance, sur la base de l'information de fiabilité reçue,
un moyen de génération (24) pour générer un ordre de réglage de puissance définissant ladite variation dudit point de consigne cible, et
un moyen de transmission (21) pour transmettre ledit ordre de réglage de puissance à ladite au moins une station de base (10),
dans lequel le point de consigne cible est un rapport d'énergie par bit sur densité de puissance de bruit cible Eb/No, et dans lequel un format et/ou un codage dudit ordre de réglage de puissance est défini dans une phase de mise en place de canal et est défini dépendant de porteuse, dans lequel
ledit moyen de transmission (21) est agencé de manière à insérer ledit ordre de réglage de puissance en tant qu'information de réglage dans un paquet en liaison descendante vide contenant uniquement ledit ordre de réglage de puissance et pas de données utilisateur, lorsque ledit ordre de réglage de puissance est requis tandis qu'aucun paquet de données en liaison descendante n'est transmis.

2. Elément de réseau selon la revendication 1, dans lequel ledit moyen de détermination (23) est agencé de manière à déterminer ladite variation dudit point de consigne cible pour le réglage de puissance sur la base de chaque information de fiabilité reçue à partir d'une pluralité de stations de base (10), et dans lequel ledit ordre de réglage de puissance est transmis par ledit moyen de transmission (21) à chacune de ladite pluralité de stations de base (10).

3. Elément de réseau selon la revendication 2, dans lequel ledit moyen de détermination (23) est agencé de manière à déterminer ladite variation dudit point de consigne cible pour le réglage de puissance sur la base d'une sélection de la meilleure information de fiabilité reçue à partir de ladite pluralité de stations de base (10).

4. Elément de réseau selon la revendication 2, dans lequel ledit moyen de détermination (23) est agencé de manière à déterminer ladite variation dudit point de consigne cible pour le réglage de puissance sur la base d'une combinaison prédéterminée des informations de fiabilité reçues.

5. Elément de réseau selon l'une quelconque des revendications précédentes, dans lequel ledit élément de réseau est un dispositif de réglage de réseau radio (20).
